# EUROPEAN PATENT APPLICATION

(11) **EP 3 506 216 A1**
(43) Date of publication of application: **03.07.2019**
(21) Application number: 17306965.9
(22) Date of filing: 28.12.2017
(51) Int. Cl.: G07C 9/00

(54) **Smart lock with power saving having an electromechanical key**

(71) Applicant: Netatmo, 92100 Boulogne Billancourt (FR)
(72) Inventor: CAZALIS, Romain, 78220 VIROFLAY (FR); LESPINASSE, Martin, 92100 BOULOGNE-BILLANCOURT (FR); POTTER, Frédéric, 92200 NEUILLY-SUR-SEINE (FR); FAUVEL, Damien, 92320 CHATILLON (FR); CHEN, Minglai, 94200 IVRY-SUR-SEINE (FR)
(74) Representative: Honnet, Sylvie Florence Liliane

(57) **Abstract**

The invention concerns a lock mechanism (10) configured to switch between a locked state and an unlocked state, the lock mechanism being configured to cooperate with at least one identification key (11) having an identification code (12), the lock mechanism comprising a processor (15) in a power saving off-state, configured to read the identification code (12) of the at least one identification key (11) and determine if the identification code (12) is an authorized code (14) of the lock mechanism when in an activated state, an event sensor (13) configured to switch the processor (15) from the power saving off-state to the activated state if an event is detected by the event sensor (13).

## Description

### FIELD

The invention relates to the field of secure key control and power saving and concerns a lock mechanism configured to equip an opening unit and to switch from a locked state of the opening unit to an unlocked state, and able to switch from a power saving off-state to an activated state. The invention also concerns a method for switching a lock mechanism from a power saving off-state to an activated state.

### BACKGROUND

Electromechanical lock and key with identification code are widespread. They enable authorized key holders to have access to locked rooms if the identification code of the key corresponds to a predetermined code in relation with the electromechanical lock. The key may be an ordinary looking key to insert into the lock or an access badge to wipe in front of the lock.

The electromechanical lock comprises a processor configured to compare the identification code of the key with the predetermined code. The electromechanical lock further comprises a battery to power the processor and the mechanical elements ensuring the opening of the opening unit with the needed energy.

Generally, locks are formed with a body that can be easily unscrewed by a locksmith to facilitate rekeying. The body has the function to lock and unlock the lock. A lock body may be found under the form of a European cylinder (defined by the DIN18251). A European cylinder is a type of lock cylinder. There exist other profiles of lock bodies like the oval cylinder that is used in the Nordic countries. A body may not be in the form of a cylinder. A lock body may be inserted into a lock or a mortise lock or a slot-in lock. This function offers the advantage of allowing its change without altering the boltwork hardware. Removing the body typically requires only loosening a set screw, then sliding the body from the boltwork.

This type of electromechanical locks has the drawback that the processor is always kept activated to receive any signal of a key or an access badge. In other words the lock mechanism has to be in continuous listening mode. This results in a high energy consumption. Therefore it is necessary to change the battery of the electromechanical lock on a regular basis to ensure that it has enough energy to power the processor and the mechanical elements or to power it continuously, using a power source.

There is consequently a need for a lock mechanism with a lower energy consumption while still able to receive any signal.

### SUMMARY OF THE INVENTION

A solution to overcome this drawback is a lock mechanism with a power saving functionality, being switched off when it is not needed and triggered on when necessary.

To this end, the subject of the invention is a lock mechanism configured to switch between a locked state and an unlocked state, the lock mechanism being configured to cooperate with at least one identification key having an identification code, the lock mechanism comprising a processor in a power saving off-state, configured to read the identification code of the at least one identification key and determine if the identification code is an authorized code of the lock mechanism when in an activated state, an event sensor configured to switch the processor from the power saving off-state to the activated state if an event is detected by the event sensor.

According to an embodiment of the invention, the lock mechanism may comprise a key hole shaped to accept insertion of the at least one identification key, and the event sensor is a contact sensor configured to detect the contact of the at least one identification key in the key hole.

According to an embodiment of the invention, the lock mechanism may comprise a mechanical actuation lever, wherein the event is a movement of the mechanical actuation lever, and wherein the processor is configured to cause the lock mechanism to switch between the locked state and the unlocked state if the identification code of the at least one identification key is an authorized code of the lock mechanism, within an authorized time slot, or set an alarm otherwise.

According to an embodiment of the invention, the event sensor is a stand-alone movement sensor, and the processor is configured to cause the lock mechanism to switch between the locked state and the unlocked state if the identification code of the at least one identification key is an authorized code of the lock mechanism, within an authorized time slot, or set an alarm otherwise.

According to an embodiment of the invention, the lock mechanism may be configured to send a sound alarm, a visual alarm and/or a signal to a remote control when an alarm is set.

According to an embodiment of the invention, the processor may be further configured to check if the authorized movement occurs within the authorized time slot.

The invention also relates to a locking system comprising the lock mechanism according to the invention and the at least one identification key, wherein the at least one identification key comprises a transmitter of the identification code.

According to the invention, the at least one identification key may be an electronic key or a remote control.

The at least one identification key may be a smart phone configured to receive the identification code from an external connection or to generate the identification code.

The invention also relates to a method for switching a processor of a lock mechanism from a power saving off-state to an activated state, the lock mechanism being configured to switch between a locked state and an unlocked state, and to cooperate with at least one identification key having an identification code, the method comprising the step of switching from a power saving off-state to an activated state of the processor upon detection of an event by an event sensor.

The method according to the invention may comprise an additional step of analyzing the detected event and the processor is configured to cause the lock mechanism to switch from the locked state to the unlocked state if the detected event is an authorized event and the identification code of the at least one identification key is an authorized code of the lock mechanism, within an authorized time slot; trigger an alarm otherwise.

The method according to the invention may comprise the steps of reading the identification code of the at least one identification key by the processor, determining if the identification code is an authorized code of the lock mechanism.

### BRIEF DESCRIPTION OF THE DRAWINGS

The accompanying drawings illustrate various non-limiting, exemplary, innovative aspects in accordance with the present descriptions :
- Figure 1 schematically represents an embodiment of a lock mechanism according to the invention;
- Figure 2 represents a block diagram of the steps of a method for switching a lock mechanism from a power saving off-state to an activated state according to the invention.

For the sake of clarity, the same elements have the same references in the various figures.

### DETAILED DESCRIPTION

Although many of the features of this invention are described in relation to a door, it is understood that they are generally applicable to any opening unit, such as a window. Moreover, these features are also applicable to many other devices, for example a padlock, having a locked state and an unlocked state.

In order to illustrate the invention, the explanations are related to a door. Note that these explanations may be applied similarly to any opening unit. A door is an opening unit enabling the access to a room (or from a room to the outside and reciprocally) through an aperture. The door is connected to a door frame that frames the aperture and is fixed to the walls around the aperture. In an unlocked state of the door, the door is mobile in relation to the door frame, typically mobile in rotation around doors hinges (or in translation in the case the door and the door frame are configured to let the door slide through a part of the door frame and into the wall). The door may be in an open configuration or a closed configuration. In the closed configuration, the door covers the aperture (i.e. no one can go through the aperture). Typically the door is equipped with a lock mechanism. The lock mechanism has a latch that is either inserted into a slot of the door frame (the door is closed) or retracted inside the door (the door is no longer attached to the door frame and may be open). In the closed configuration, the latch is inserted into the slot of the door frame. In existing lock mechanisms, a lock clutch is connected to the latch. The lock clutch is usually engaged with both the indoor and outdoor door knobs. This enables a user to activate the lock clutch to make the latch move by moving one of the door knobs. Therefore a user has to move a door knob of the door to switch from the closed configuration of the door to the open configuration of the door. Indeed, the lock clutch being engaged with the knob, the movement of the knob leads to the movement of the latch. Moving the door knob makes the latch retract into the door. The user can pull or push the door to open it.

In the closed configuration of the door, the lock mechanism can be either in a locked state or an unlocked state. The unlocked state corresponds to the case discussed above. The door may be open by a user when activating a door knob and pushing or pulling the door. More precisely, the lock mechanism has a deadbolt entirely positioned inside the locking mechanism in the unlocked state. In the locked state, this deadbolt projects beyond the lock mechanism and is inserted into a slot of the door frame, thus locking the door to the frame. The movement of the deadbolt can be mechanically obtained, for example by a rotation of a key inserted into the locking mechanism. The rotation of the key clockwise, respectively anticlockwise, causes the deadbolt to translate either outside the lock mechanism to be inserted into the slot of the door frame, or inside the lock mechanism. To switch from the locked state of the door to the unlocked state of the door, a user has to rotate the key with the corresponding rotation of the key inside the lock mechanism. As an alternative to a rotation of the key, the lock mechanism may be unlocked by an authorized identification key. When it is identified in the vicinity of the lock mechanism, the authorized identification key may activate a motor in the lock mechanism that causes the deadbolt to translate. Then, to open the door, the user turns a door knob or pushes a door handle of the door, as explained before.

This previous case corresponds to a single-point lock mechanism (i.e. with a single deadbolt). The invention similarly applies to a multi-point lock mechanism. A multi-point lock, also known as a safety lock, provides extra security as it distributes the locking points (i.e. a plurality of deadbolts) over the entire door. The most common multi-point lock is the three-point lock composed of a main deadbolt in the center and two other bolts at the top and at the bottom actuated by a rod. Some multi-point locks may have up to ten locking points.

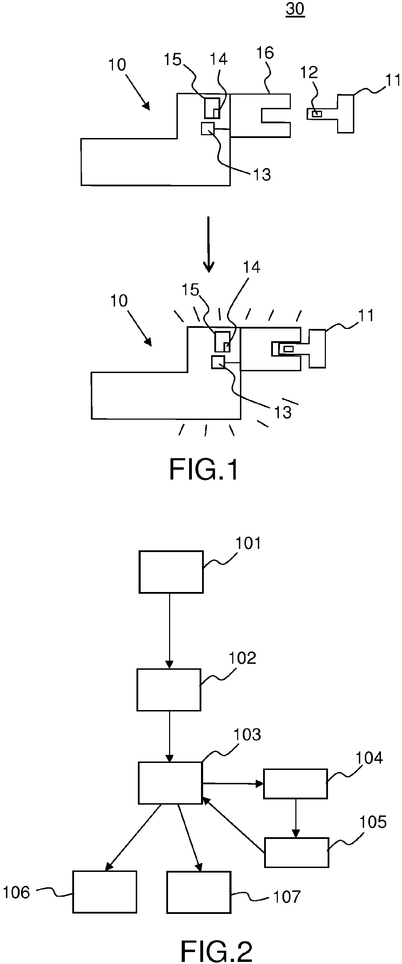

Figure 1 schematically represents a first embodiment of a lock mechanism 10 according to the invention. The lock mechanism 10 is configured to switch between a locked state and an unlocked state. The lock mechanism 10 is configured to cooperate with at least one identification key 11 having an identification code 12. The lock mechanism 10 according to the invention comprises an event sensor 13. The lock mechanism 10 comprises a processor 15. In an activated state, the processor 15 is configured to read the identification code 12 of the at least one identification key 11 and determine if the identification code 12 is an authorized code 14 of the lock mechanism. The event sensor 13 is configured to switch the processor 15 from a power saving off-state to an activated state if an event is detected by the event sensor 13. In other words, when the lock mechanism 10 is not needed, the processor is placed in an off-state to save power. This feature of the invention advantageously increases the duration between two battery changes, since the battery is used less often, and knowing that the processor consumption is the most important part regarding the total consumption of the global system, including the sensor that stays on.

The lock mechanism 10 comprises a key hole shaped to accept insertion of the identification key 11. This key hole may take a number of shapes depending on the shape of the physical identification key, for example, it could include, but is not limited to, the following shapes: cylindrical, parallelepipedic and more generally any shape wherein the section is quadrilateral, a circle, or an oval and/or a combination of these shapes (for instance a proximal part of the key hole with a circular section and an other part with a cubic section). In other words the key hole may take various shapes. The event sensor 13 may be a contact sensor configured to detect the contact of the identification key in the key hole. In this embodiment, the contact as detected by the contact sensor is the event that activates the processor 15. The processor 15 is configured to cause the lock mechanism 10 to switch between the locked state and the unlocked state if the identification code 12 of the at least one identification key 11 is an authorized code 14 of the lock mechanism 10, within an authorized time slot. Otherwise the processor 15 may be configured to send an alarm and/or not to allow the change of state of the lock.

As an alternative, the processor 15 may also be configured to send an alarm if the detected contact is not an authorized contact. This alternative enables to send an alarm once an unauthorized contact is detected (for example due to an unauthorized key). The authorized contact may correspond to a contact performed by insertion of a key with the right shape, i.e. having a complementary shape to the shape of the key hole. The key hole may comprise a stop point at its distal end and the authorized contact occurs when the identification key contacts the stop point.

The lock mechanism 10 according to the invention comprises a processor 15 configured to read the identification code 12 of the at least one identification key 11 and determine if the identification code 12 is an authorized code 14 of the locking mechanism 10. The processor 15 of the lock mechanism 10 comprises an algorithm that is able to generate a plurality of codes. When moving an identification key 11 close to the locking mechanism 10, (i.e. until about 10 meters of the lock mechanism, for example thanks to the BLE technology, (acronym of Bluetooth™ Low Energy technology), one of the codes generated by the algorithm of the processor 15 is transmitted from the processor 15 to the identification key 11. In return, the processor 15 should receive from the identification key 11 an authorized code, that is to say an identification code 12 corresponding to the code transmitted by the processor 15. There is a communication between the lock mechanism 10 and the identification key 11. And if the processor 15 receives from the identification key 11, as a response to its code, an authorized code, the identification key 11 is considered as an authorized key for switching the lock mechanism 10 between the locked and unlocked state. The processor 15 may deliver a command if the identification code 12 of the at least one identification key 11 is an authorized code 14 of the lock mechanism 10. This command may be an activation of a motor of the lock mechanism 10 to translate the deadbolt to unlock the door.

The lock mechanism 10 according to the invention may comprise a mechanical actuation lever 16, and the event may be a movement of the mechanical actuation lever 16 (typically a rotation or a translation of the door knob). And the processor 15 may be configured to cause the lock mechanism 10 to switch between the locked state and the unlocked state if the identification code 12 of the at least one identification key 11 is an authorized code 14 of the lock mechanism, within an authorized time slot, or send an alarm otherwise. Therefore, the processor 15 of the lock mechanism 10 is in a power saving off-state until the mechanical actuation lever 16 is moved or turned. When a user moves or turns the mechanical actuation lever 16 with the intention to open the door, the processor switches to its activated state and further checks the validity of the identification key. The processor determines if the code of the identification key is an authorized code of the lock mechanism 10. If the identification code is an authorized code, the processor 15 may send a command to change the state of the lock mechanism, i.e. from its locked state to its unlocked state. If the identification code is not an authorized code, the processor 15 sends an alarm.

The lock mechanism 10 may be configured to generate or to send a signal to a local or distant device in charge of performing a sound alarm, a visual alarm and/or a signal (for instance, a short message to a smart phone used as a remote control). For example, when the alarm of the lock mechanism is triggered, the authorized person at his/her office may receive a signal (e-mail or phone call) on his/her smart phone, and/or this signal may be directed to a neighbor and/or the police station.

In an embodiment of the invention, the event sensor 13 of the lock mechanism 10 is a stand-alone movement sensor. The stand-alone sensor is a sensor that does not need any energy input from outside. This stand-alone sensor is configured to convert ambient energy into electrical energy. Such a stand-alone wireless sensor only requires microcontrollers that save ambient energy. Ambient energy sources may include light, temperature gradients, vibrations, RF signal emissions, or any source that can produce an electrical charge in a sensor. A high efficiency energy conversion circuit like the LTC3588-1 circuit of Linear Technology™ can convert the sensor output into a usable voltage. Such a typical stand-alone sensor comprises the energy source sensor, an energy storage element and the means for converting this stored energy into a usable regulated voltage. A stand-alone sensor may also be based on new technologies recently developed that convert radio waves (from Wi-Fi™, Bluetooth™, or waves from DECT™ phones) into electrical energy. The movement sensor may not be fed by the battery of the lock mechanism 10 so that this battery may be switched off when appropriate or it can be connected to the same battery but in this case, when the processor is off , the total consumption of the said battery turns out to be much weaker by far.

Nevertheless, the movement sensor can detect any movement, for example of a person approaching the door. Since the movement sensor detects an event (i.e. a movement), the processor 15 switches from its power saving off-state to its activated state. Once activated, the processor sends a code via its transmitter to the person (i.e. to the identification key that an authorized person should have) and should receive in return an authorized code. The processor 15 can cause the lock mechanism 10 to switch between the locked state and the unlocked state if it receives in return an authorized code 12 and the identification code 12 received in return by the processor 15 is an authorized code 14 of the lock mechanism, within an authorized time slot, or the processor may send an alarm otherwise.

The identification key 11 may be an electronic key, an access badge or a remote control (dedicated device, smart phone, tablet, etc).

The processor 15 may be further configured to check if the movement occurs within an authorized time slot. This is of particular interest to determine when a temporary authorized person may have access to the house.

An authorized person is for example all day at his/her office and only expects his child to come home for lunch between 12 a.m and 1 p.m. The authorized time slot is set between 12 a.m and 1 p.m. Once in the activated state, the processor 15 checks if the detected movement occurs within an authorized time slot, i.e. between 12 a.m and 1 p.m. If it is 12.30 a.m, it is in the authorized time slot when a child is expected to come back home. The lock mechanism 10 will further determine if the identification code sent by the identification key is an authorized one.

If it is 11.30 a.m. or 2 p.m., a detected movement does not occur within the authorized time slot. At that time, no one is expected to come back home. The activated state of the lock mechanism is to prevent opening of the door and/or to set an alarm.

In the case of an authorized key holder, when coming back home, the movement sensor 13 of the lock mechanism 10 may detect the presence of the authorized key holder, and/or detect the insertion of the key in the lock mechanism, depending of the configuration of the system set by the user or the provider of the solution. The lock mechanism 10 switches from its power saving off-state to its activated state. Once activated, the lock mechanism 10 analyses the detected movement. It may for example analyze that a key is inserted into the key hole of the lock mechanism 10 whereas only access should be given to persons having a dedicated badge or remote control.

The invention also relates to a locking system 30 comprising the lock mechanism 10 according to the invention and the at least one identification key 11, wherein the at least one identification key comprises a transmitter of the identification code.

The at least one identification key may be an electronic key or a remote control. The remote control may be a smart phone configured to receive the identification code from an external connection or to generate the identification code. This configuration advantageously allows a lot of flexibility in managing the access to the house while maintaining a high level of security.

In this embodiment of the locking system 30, the at least one identification key is a remote control and the processor 15 of the lock mechanism 10 is configured to receive from the remote control the authorized code and deliver a command to unlock the lock mechanism 10. The remote control may be for instance a smart phone or a tablet. The communication between the processor 15 and the remote control may operate for example through Wi-Fi™, NFC™ or Bluetooth™. One advantage of this embodiment is the flexibility of the control. Indeed, it is possible to deliver the command to unlock the lock mechanism 10 thanks to the remote control in a secure way. It is also possible to transfer the switching control to any other remote controls in case of need. For example, a person waiting for a postal package in his absence may send to the postman an authorized code valid for a predetermined time period. The postman may use his own smart phone with the downloaded authorized code to unlock the lock mechanism 10, so as to come in and deliver the postal package. And even if the postman does not lock the lock mechanism 10 after leaving the house, the processor 15 may be configured to send to the motor of the lock mechanism 10 the command to lock the lock mechanism 10 after a certain predefined period of time, as explained before, thus ensuring a high level of security, even if a person with a special authorization had a temporary control of the lock mechanism 10.

Figure 2 represents a block diagram of the steps of a method for switching a processor of a lock mechanism from a power saving off-state to an activated state according to the invention. The method for switching a processor of a lock mechanism from a power saving off-state to an activated state, the lock mechanism being configured to switch between a locked state and an unlocked state, the lock mechanism being configured to cooperate with at least one identification key having an identification code, comprises a step 101 of detecting an event by an event sensor. The event may be a movement of a person coming in the vicinity of the lock mechanism. Or the event may be the insertion of the key in the key hole of the lock mechanism. The movement may also be the movement of the door knob, i.e. if someone tries to actuate the door knob to come in. The movement may also be any contact on the door knob or on the lock mechanism, the contact implying the approaching of a hand or a badge. The event sensor may be a contact sensor. An authorized person willing to open the door should first touch the door knob, either with his/her hand or with a badge or any remote control, to place the processor into its activated state. The cooperation of a physical identification key with the locking mechanism comprises an insertion of the physical key into the key hole of the locking mechanism and an exchange of identification codes between the identification key and the processor of the locking mechanism. If the identification key is a remote control, the cooperation only comprises an exchange of identification codes between the identification key and the processor of the locking mechanism.

The method according to the invention comprises a step 102 of switching the processor from a power saving off-state to an activated state. By default, i.e. if nothing happens, the processor is in its off-state to save power. Once an event is detected by the sensor, the processor switches to its activated state and is thus able to react to event(s).

After having switched the processor of the lock mechanism into its activated state, the method comprises the step 103 of analyzing the detected event. The processor is configured to cause the lock mechanism to switch (step 106) from the locked state to the unlocked state if the detected event is an authorized event and the identification code of the at least one identification key is an authorized code of the lock mechanism, within an authorized time slot. Otherwise the processor may optionally triggers an alarm and set lock system in a position where door cannot be opened.

The method comprises the step 104 of reading the identification code of the at least one identification key by the processor of the lock mechanism. And the method comprises the step 105 of determining if the identification code is an authorized code of the lock mechanism.

This method enables to ensure an access to the house only to the authorized persons within authorized time slots. Furthermore, due to the switching between a power saving off-state and an activated state of the lock mechanism, there is a better energy management of the power supply or battery of the lock mechanism.

The examples disclosed in this specification are therefore only illustrative of some embodiments of the invention. They do not in any manner limit the scope of said invention which is defined by the appended claims.

## Claims

1. A lock mechanism (10) configured to switch between a locked state and an unlocked state, the lock mechanism being configured to cooperate with at least one identification key (11) having an identification code (12),
**characterized in that** the lock mechanism comprises:
- a processor (15) in a power saving off-state, configured to read the identification code (12) of the at least one identification key (11) and determine if the identification code (12) is an authorized code (14) of the lock mechanism when in an activated state,
- an event sensor (13) configured to switch the processor (15) from the power saving off-state to the activated state if an event is detected by the event sensor (13).

2. The lock mechanism (10) according to claim 1, comprising a key hole shaped to accept insertion of the at least one identification key (11), wherein the event sensor is a contact sensor configured to detect the contact of the at least one identification key in the key hole.

3. The lock mechanism (10) according to one of the claims 1 or 2, comprising a mechanical actuation lever (16), wherein the event is a movement of the mechanical actuation lever (16), and wherein the processor (15) is configured to cause the lock mechanism to switch between the locked state and the unlocked state if the identification code (12) of the at least one identification key (11) is an authorized code (14) of the lock mechanism, within an authorized time slot, or set an alarm otherwise.

4. The lock mechanism (10) according to claim 1, wherein the event sensor is a stand-alone movement sensor, and wherein the processor (15) is configured to cause the lock mechanism to switch between the locked state and the unlocked state if the identification code (12) of the at least one identification key (11) is an authorized code (14) of the lock mechanism, within an authorized time slot, or set an alarm otherwise.

5. The lock mechanism (10) according to one of the claims 2 to 4, configured to send a sound alarm, a visual alarm and/or a signal to a remote control when an alarm is set.

6. The lock mechanism (10) according to one of the claims 1 to 5, wherein the processor (15) is further configured to check if the authorized movement occurs within the authorized time slot.

7. A locking system (30) comprising the lock mechanism (10) according to one of the preceding claims and the at least one identification key (11), wherein the at least one identification key comprises a transmitter of the identification code.

8. The locking system according to claim 7, wherein the at least one identification key is an electronic key or a remote control.

9. The locking system according to claim 7, wherein the at least one identification key is a smart phone configured to receive the identification code from an external connection or to generate the identification code.

10. A method for switching a processor of a lock mechanism from a power saving off-state to an activated state, the lock mechanism being configured to switch between a locked state and an unlocked state, and to cooperate with at least one identification key having an identification code, the method being **characterized in that** it comprises the step of:
- Switching (102) from a power saving off-state to an activated state of the processor upon detection (101) of an event by an event sensor.

11. The method according to claim 10, comprising an additional step (103) of analyzing the detected event and wherein the processor is configured to cause the lock mechanism to :
- switch (106) from the locked state to the unlocked state if the detected event is an authorized event and the identification code of the at least one identification key is an authorized code of the lock mechanism, within an authorized time slot;
- trigger (107) an alarm otherwise.

12. The method according to claim 11, the lock mechanism comprising a processor, the method comprising the steps of:
- reading (104) the identification code of the at least one identification key by the processor,
- determining (105) if the identification code is an authorized code of the lock mechanism.
